# EUROPEAN PATENT APPLICATION

(11) **EP 4 357 924 A1**
(43) Date of publication of application: **24.04.2024**
(21) Application number: 22874282.1
(22) Date of filing: 13.06.2022
(51) Int. Cl.: G06F 11/34

(54) **APPLICATION PERFORMANCE TESTING METHOD, METHOD AND APPARATUS FOR ESTABLISHING PERFORMANCE TESTING MODEL**

(30) Priority: 28.09.2021 CN 202111158071
(71) Applicant: Huawei Technologies Co., Ltd., Shenzhen, Guangdong 518129 (CN)
(72) Inventor: WEI, Fuchun, Shenzhen, Guangdong 518129 (CN); WANG, Yongzhong, Shenzhen, Guangdong 518129 (CN); JI, Yayun, Shenzhen, Guangdong 518129 (CN); OUYANG, Zhongqing, Shenzhen, Guangdong 518129 (CN)
(74) Representative: Gill Jennings & Every LLP
(86) International application number: PCT/CN2022/098397
(87) International publication number: WO 2023/050885

(57) **Abstract**

An application performance test method is provided and includes: obtaining running status data of an application running on a computing chip and a memory access volume of each data access path of the computing chip in a running process of the application, where the computing chip includes a plurality of memory units, and the data access path represents an access path between the memory units; determining running performance information of the application based on the running status data and the memory access volume of each data access path; and obtaining a test result of the application based on the running performance information of the application and a performance test model established for the computing chip, where the performance test model includes a performance test line of each data access path. A method and an apparatus for establishing a performance test model are further disclosed.

## Description

### CROSS-REFERENCE TO RELATED APPLICATIONS

This application claims priority to Chinese Patent Application No. 202111158071.0, filed with the China National Intellectual Property Administration on September 28, 2021 and entitled "APPLICATION PERFORMANCE TEST METHOD AND APPARATUS, AND METHOD AND APPARATUS FOR ESTABLISHING PERFORMANCE TEST MODEL", which is incorporated herein by reference in its entirety.

### TECHNICAL FIELD

This application relates to the field of computer technologies, and in particular, to an application performance test method and apparatus, and a method and an apparatus for establishing a performance test model.

### BACKGROUND

Currently, various applications are increasingly widely used and can be used to resolve practical problems in various industries. In an actual use process, a requirement on performance (such as a data processing speed and a delay) of some applications is high. For example, in the field of artificial intelligence technologies, there is a very strict requirement on a data processing speed and the like of an application including a neural network model. Therefore, to enable an application to have better performance, performance of the application needs to be tested, and the application needs to be optimized based on a test result.

Because the application needs to run on a computing chip to perform data processing, the performance of the application is actually performance of the application when the application runs on the computing chip. Therefore, the performance of the application usually needs to be tested by using the computing chip.

As a structure of a computing chip becomes increasingly complex, a current application performance test method cannot obtain a test result with high precision and accuracy for a computing chip with a complex structure.

### SUMMARY

Embodiments of this application provide an application performance test method and apparatus, and a method and an apparatus for establishing a performance test model, to improve test accuracy and test precision.

According to a first aspect, an embodiment of this application provides an application performance test method. When an application is tested, the application runs on a computing chip, the computing chip includes a plurality of memory units, an access path between different memory units may be referred to as a data access path, and there may be one or more data access paths in the computing chip. Running status data of the application running on the computing chip and a memory access volume of each data access path of the computing chip in a running process of the application are obtained, where the running status data of the application may include a running time of the application and a computing amount of a computing unit of the computing chip within the running time. Running performance information of the application is determined based on the running status data of the application and the memory access volume of each data access path, and a test result of the application is obtained based on the running performance information of the application and a performance test model established for the computing chip. The performance test model is pre-established for the computing chip, and is configured to describe optimal performance of the computing chip. The performance test model includes a performance test line of each data access path. The performance test model of the computing chip may be established based on a peak value of a computing capability of the computing unit of the computing chip and a peak bandwidth of each data access path. The peak value of the computing capability of the computing unit and the peak bandwidth of each data access path are determined by testing the computing chip by using test data.

Compared with a method for establishing a performance test model for a memory unit of a computing chip to test an application in a related technology, in this embodiment of this application, the performance test model established for the computing chip includes the performance test line of each data access path of the computing chip. When the application is tested, the running performance information of the application is determined based on the running status data of the application and the memory access volume of each data access path of the computing chip, and the running performance information of the application is compared with the performance test model that includes the performance test line of each data access path, so that the test result with higher precision can be obtained, thereby improving test accuracy and test precision.

In a possible implementation, the running performance information of the application may include sub-path performance information of each data access path. The sub-path performance information of each data access path may be obtained in the following manner: obtaining the running time of the application, calculating the computing amount of the computing unit of the computing chip within the running time, and determining a computing capability parameter of the computing chip in the running process of the application based on the obtained computing amount and running time. The computing capability parameter indicates a computing amount completed by the computing chip in a unit time in the running process of the application. For each data access path, an operation intensity of each data access path is determined based on the computing amount and the memory access volume of each data access path. An operation intensity of a data access path indicates a computing amount corresponding to unit memory access of the data access path. The sub-path performance information of each data access path is generated based on the computing capability parameter and the operation intensity of each data access path.

The test result with higher precision may be obtained based on a comparison result between the sub-path performance information of each data access path and the performance test line of each data access path in the performance test model.

In a possible implementation, the running performance information of the application may further include set performance information of each data path set in addition to the sub-path performance information of each data access path. Each data path set includes at least one data access path, and data access paths in a same data path set cannot be simultaneously accessed. The set performance information of each data path set may be obtained in the following manner: obtaining the running time of the application, calculating the computing amount of the computing unit of the computing chip within the running time, and determining a computing capability parameter of the computing chip in the running process of the application based on the obtained computing amount and running time. For each data path set, an overall operation intensity of each data path set is determined based on a sum of memory access volumes of data access paths in each data path set and the computing amount of the computing unit of the computing chip, and the set performance information of each data path set is generated based on the computing capability parameter and the overall operation intensity of each data path set.

The comparison result between the sub-path performance information of each data access path and the performance test line of each data access path in the performance test model may reflect performance of each data access path. A comparison result between the set performance information of each data path set and the performance test line of each data access path in the performance test model may reflect overall performance of the data access paths included in each data path set. Therefore, based on the comparison result between the sub-path performance information of each data access path and the performance test line of each data access path in the performance test model, and the comparison result between the set performance information of each data path set and the performance test line of each data access path in the performance test model, precision and accuracy of the test result can be further improved.

In a possible implementation, after the running performance information of the application is determined, a comparison result between the running performance information of the application and the performance test line of each data access path in the performance test model may be determined, and the comparison result is used as the test result of the application. This helps a user determine an optimization direction of the application based on the comparison result.

In a possible implementation, after the running performance information of the application is determined, a comparison result between the running performance information of the application and the performance test line of each data access path in the performance test model may be determined, an analysis result indicating to optimize the application is determined based on the comparison result, and the analysis result is used as the test result of the application, so that a user can effectively optimize the application directly based on the analysis result.

According to a second aspect, an embodiment of this application provides a method for establishing a performance test model, used to establish a performance test model for a computing chip. The computing chip may include any one of the following chips: a central processing unit (central processing unit, CPU) chip, a tensor processing unit (tensor processing unit, TPU) chip, a neural-network processing (neural-network processing unit, NPU) chip, a graphic processing unit (graphic processing unit, GPU) chip, and an artificial intelligence (artificial intelligence, AI) chip. The computing chip includes a plurality of memory units, and each data access path represents an access path between the memory units.

The method for establishing a performance test model may include: determining a peak value of a computing capability of a computing unit of the computing chip based on a plurality of pieces of obtained first test data with different data volumes; and determining, for each data access path of the computing chip, a peak bandwidth of each data access path based on a plurality of pieces of obtained second test data with different data volumes, and establishing a performance test model based on the peak bandwidth of each data access path and the peak value of the computing capability of the computing unit, where the performance test model includes a performance test line of each data access path. When the peak value of the computing capability of the computing unit of the computing chip is determined, a plurality of tests may be performed on the computing unit of the computing chip based on the plurality of pieces of first test data. A test process of each test includes: determining a computing capability of the computing unit based on a ratio of a computing amount to a computing time of the computing unit for processing input first test data; and using, as the peak value of the computing capability of the computing unit of the computing chip, a maximum value of the computing capability of the computing unit determined in each test.

In this embodiment of this application, a performance test line is determined for each data access path of the computing chip, and the performance test model including the performance test line of each data access path is established, so that the performance test model with higher precision can be established. The performance test model obtained by using the foregoing method is used to perform a performance test on an application, and a test result with higher precision may be obtained.

According to a third aspect, an embodiment of this application provides an application performance test apparatus, where the apparatus includes:
a data obtaining unit, configured to obtain running status data of an application running on a computing chip and a memory access volume of each data access path of the computing chip in a running process of the application, where the computing chip includes a plurality of memory units, and the data access path represents an access path between the memory units; and
a performance test unit, configured to determine running performance information of the application based on the running status data and the memory access volume of each data access path; and obtain a test result of the application based on the running performance information of the application and a performance test model established for the computing chip, where the performance test model includes a performance test line of each data access path.

In a possible implementation, the running status data includes a running time of the application and a computing amount of a computing unit of the computing chip within the running time; and the performance test unit is specifically configured to:
determine a computing capability parameter of the computing chip in the running process of the application based on the computing amount and the running time;
determine, for each data access path, an operation intensity of each data access path based on the computing amount and the memory access volume of each data access path; and
generate sub-path performance information of each data access path based on the computing capability parameter and the operation intensity of each data access path.

In a possible implementation, the running performance information of the application further includes set performance information of each data path set; each data path set includes at least one data access path, and data access paths in a same data path set cannot be simultaneously accessed; and the performance test unit is further configured to:
determine, for each data path set, an overall operation intensity of each data path set based on a sum of memory access volumes of data access paths in each data path set and the computing amount; and
generate the set performance information of each data path set based on the computing capability parameter and the overall operation intensity of each data path set.

In a possible implementation, the performance test unit is specifically configured to:
determine a comparison result between the running performance information of the application and the performance test line of each data access path in the performance test model, and use the comparison result as the test result of the application.

In a possible implementation, the performance test unit is specifically configured to:
determine a comparison result between the running performance information of the application and the performance test line of each data access path in the performance test model; and
determine, based on the comparison result, an analysis result indicating to optimize the application, and use the analysis result as the test result of the application.

In a possible implementation, the performance test model is established based on a peak value of a computing capability of the computing unit of the computing chip and a peak bandwidth of each data access path. The peak value of the computing capability of the computing unit and the peak bandwidth of each data access path are determined by testing the computing chip by using test data.

According to a fourth aspect, an embodiment of this application provides an apparatus for establishing a performance test model, where the apparatus includes:
a computing power test unit, configured to determine a peak value of a computing capability of a computing unit of a computing chip based on a plurality of pieces of obtained first test data with different data volumes;
a bandwidth test unit, configured to determine, for each data access path of the computing chip, a peak bandwidth of each data access path based on a plurality of pieces of obtained second test data with different data volumes, where the computing chip includes a plurality of memory units, and each data access path represents an access path between the memory units; and
a model establishment unit, configured to establish a performance test model based on the peak bandwidth of each data access path and the peak value of the computing capability of the computing unit, where the performance test model includes a performance test line of each data access path.

In a possible implementation, the computing power test unit is specifically configured to:
perform a plurality of tests on the computing unit of the computing chip based on the plurality of pieces of first test data, where a test process of each test includes: determining a computing capability of the computing unit based on a ratio of a computing amount to a computing time of the computing unit for processing input first test data; and
use, as the peak value of the computing capability of the computing unit of the computing chip, a maximum value of the computing capability of the computing unit determined in each test.

In a possible implementation, the computing chip includes any one of the following chips: a CPU chip, a TPU chip, an NPU chip, a GPU chip, and an AI chip.

According to a fifth aspect, an embodiment of this application provides a computing device, where the computing device includes a memory and a processor, the memory stores a computer program that can run on the processor, and when the computer program is executed by the processor, the processor is enabled to implement any method recorded in the first aspect or any method recorded in the second aspect.

According to a sixth aspect, an embodiment of this application provides a computer program product, including computer executable instructions, where the computer executable instructions are used to enable a computer to perform any method provided in the first aspect or any method provided in the second aspect.

According to a seventh aspect, an embodiment of this application provides a computer-readable storage medium, where the computer-readable storage medium stores computer executable instructions, and the computer executable instructions are used to enable a computer to perform any method provided in the first aspect or any method provided in the second aspect.

For technical effects that can be achieved in any one of the third aspect to the seventh aspect, refer to the descriptions of the beneficial effects in the first aspect or the second aspect. Details are not described herein again.

### BRIEF DESCRIPTION OF DRAWINGS

FIG. 1 is a schematic diagram of a structure of an example of a computing chip to which an embodiment of this application is applicable;
FIG. 2 is a flowchart of an example of establishing a performance test model according to an embodiment of this application;
FIG. 3 is a schematic diagram of an example of a performance test line of a data access path according to an embodiment of this application;
FIG. 4 is a schematic diagram of an example of a performance test model of a computing chip according to an embodiment of this application;
FIG. 5 is a flowchart of an example of an application performance test method according to an embodiment of this application;
FIG. 6 is a schematic diagram of an example of a test result of a performance test of an application according to an embodiment of this application;
FIG. 7 is a schematic diagram of another example of a test result of a performance test of an application according to an embodiment of this application;
FIG. 8 is a schematic diagram of another example of a test result of a performance test of an application according to an embodiment of this application;
FIG. 9 is a schematic diagram of another example of a test result of a performance test of an application according to an embodiment of this application;
FIG. 10 is a schematic diagram of another example of a test result of a performance test of an application according to an embodiment of this application;
FIG. 11 is a schematic diagram of another example of a performance test model of a computing chip according to an embodiment of this application;
FIG. 12 is a schematic diagram of an example of an apparatus for establishing a performance test model according to an embodiment of this application;
FIG. 13 is a schematic diagram of an example of an apparatus for a performance test model of an application according to an embodiment of this application;
FIG. 14 is a schematic diagram of an example of a computing device according to an embodiment of this application; and
FIG. 15 is a schematic diagram of an example of a computing device according to an embodiment of this application.

### DESCRIPTION OF EMBODIMENTS

To make the objectives, technical solutions, and advantages of embodiments of this application clearer, the following describes embodiments of this application in detail with reference to the accompanying drawings. The terms used in embodiments of this application are only used to explain specific embodiments of this application, but are not intended to limit this application. It is clear that the described embodiments are merely some but not all of embodiments of this application. All other embodiments obtained by a person of ordinary skill in the art based on embodiments of this application without creative efforts shall fall within the protection scope of this application.

Before specific solutions provided in embodiments of this application are described, some terms in this application are generally explained and described, to facilitate understanding of a person skilled in the art. The terms in this application are not limited.
(1) Roofline (roofline) model is a model configured to visually describe a computing capability and a memory bandwidth of a computing chip. By comparing the roofline model established for a computing chip with an actual computing capability of the computing chip when an application runs on the computing chip, a main factor that limits application performance can be analyzed, and optimal performance that can be obtained by the application on the computing chip may be provided.
   In the roofline model, a horizontal coordinate represents an operation intensity, in a unit of flop/memory, and a vertical coordinate represents a computing capability, which is also referred to as a computing power, in a unit of flop/s. flop is a unit of a computing amount of the computing chip, and flop/s represents a computing amount of the computing chip in a unit time, for example, a quantity of floating-point operations that can be completed by the computing chip per second; and memory is a unit of a memory access volume, and flop/memory represents a computing amount corresponding to unit memory access, for example, a quantity of floating-point operations that can be completed by using data obtained by one memory access.
(2) AI technology is a theory, method, and technology that uses digital computers or machines controlled by digital computers to simulate, extend and expand human intelligence, perceive the environment, acquire knowledge, and use knowledge to obtain the best results. The AI technology is a comprehensive technology in computer science and is mainly to study the design principles and implementation methods of various intelligent machines, so that the machines have the functions of perception, reasoning and decision-making. The AI technology mainly includes several major directions such as a computer vision technology, a speech processing technology, and machine learning/deep learning.
(3) Deep learning (deep learning, DL) model is a type of algorithm based on a deep neural network, is to mainly process and analyze input data by using nonlinear transformations, and may be used in scenarios such as perception and decision-making in the field of AI technologies, for example, image and speech recognition, natural language translation, and computer gaming.

In embodiments of this application, a "plurality of" refers to two or more. In view of this, in embodiments of this application, the "plurality of" may also be understood as "at least two". "At least one" may be understood as one or more, for example, one, two, or more. For example, including at least one means that one, two, or more are included, without limiting which items are included. For example, if at least one of A, B, and C is included, the included items may be A, B, C, A and B, A and C, B and C, or A, B, and C. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise stated, ordinal numbers such as "first", "second", and the like mentioned in embodiments of this application are used for distinguishing a plurality of objects without limiting a sequence, a time sequence, priorities, or importance levels of the plurality of objects.

Currently, various applications are increasingly widely used and can be used to resolve practical problems in various industries. In an actual use process, a requirement on performance of some applications is high. Performance of an application actually refers to performance of the application when the application runs on a computing chip. To enable the application to have better performance, the performance of the application usually needs to be tested by using the computing chip.

Before the performance of the application is tested, a performance test model needs to be established for the computing chip first, where the performance test model may be a roofline model. In a related technology, the roofline model is established for one or more memory units of the computing chip. When the performance test model established in this manner is configured to test an application, for a computing chip with a complex structure, for example, a computing chip having a cross-level access feature of memories of different levels, a test error is large, a real working status and a bottleneck of the application cannot be accurately represented and fed back, and a test result with high precision and accuracy cannot be obtained.

Based on this, embodiments of this application provide a model establishment method and an application performance test method. The model establishment method and the application performance test method may be applied to computing chips such as an AI chip, a CPU chip, a TPU chip, a neural-network processing unit NPU chip, and a GPU chip. The AI chip is mainly configured to perform computing and processing in the field of artificial intelligence, and may also be referred to as a perception chip. The TPU chip includes an accelerator-specific integrated circuit used for machine learning. The NPU chip uses a data-driven parallel computing architecture, and is mainly configured to process multimedia data. The GPU chip is configured to process graphics and image data.

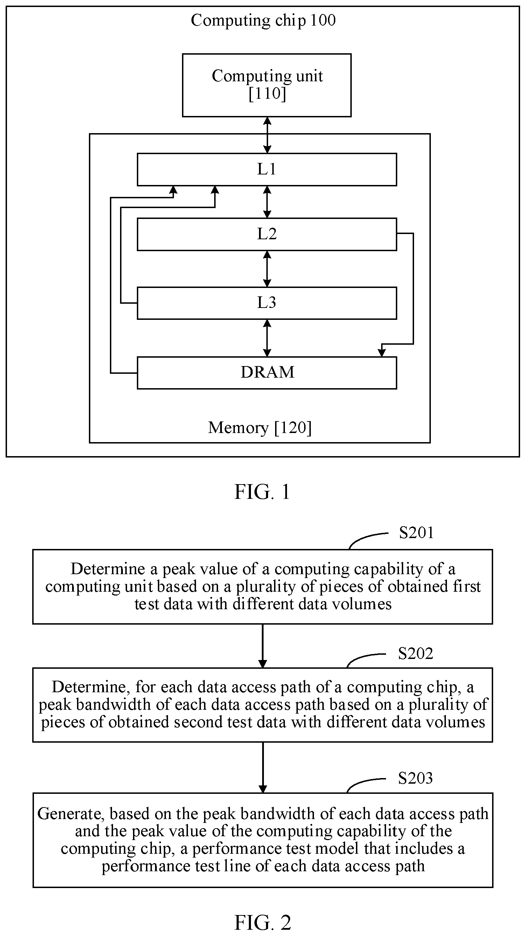

FIG. 1 is a schematic diagram of a structure of a computing chip. The computing chip may be an AI chip. As shown in FIG. 1, the computing chip 100 includes a computing unit 110 and a memory 120. The computing unit 110 may also be referred to as an arithmetic unit, and includes an arithmetic logic unit (arithmetic logical unit, ALU) configured to perform a fixed-point or floating-point arithmetic operation and various logical operations. The arithmetic operation may include operations such as addition, subtraction, multiplication, division, and comparison. The logical operation includes operations such as AND, OR, NOT, XOR, and shift. The computing unit 110 may access the memory 120, read data from the memory 120, perform computing processing on the read data, and then store the processed data or the data in the processing process into the memory 120.

The memory 120 may include a volatile memory (volatile memory), for example, a random access memory (random access memory, RAM) or a dynamic random access memory (dynamic random access memory, DRAM), or may include a non-volatile memory (non-volatile memory), for example, a storage-class memory (storage class memory, SCM), or may include a combination of a volatile memory and a non-volatile memory.

The memory 120 may store the data processed by the computing unit 110 or the data to be processed by the computing unit 110. The data stored in the memory 120 may also include data read from an external memory to the memory.

The memory 120 may include a plurality of memory units. Based on a speed at which each memory unit is accessed by the computing unit 110, the plurality of memory units may be divided into memory units of different levels, for example, L1, L2, L3, and DRAM shown in FIG. 1. L1 is accessed by the computing unit 110 at a highest speed, and may be referred to as a first level memory unit, L2 may be referred to as a second level memory unit, L3 may be referred to as a third level memory unit, and the DRAM may be referred to as a fourth level memory unit.

Optionally, L1, L2, and L3 may use a synchronous dynamic random access memory (synchronous dynamic random access memory, SDRAM), or use a double data rate synchronous dynamic random access memory (double data rate SDRAM, DDR SDRAM). For example, the third level memory unit L3 may use the SDRAM, and the first level memory unit L1 and the second level memory unit L2 may use the DDR SDRAM.

In this embodiment of this application, in the computing chip 100, memory units at adjacent levels may access each other, memory units at non-adjacent levels may also access each other. For example, L3 may be accessed by the adjacent upper level memory unit L2, or may be accessed by the first level memory unit L1; and the DRAM may be accessed by the adjacent upper level memory unit L3, or may be accessed by the first level memory unit L1. Access between two memory units of different levels may be referred to as cross-level access.

It may be understood that the structure and the connection relationship shown in this embodiment of this application do not constitute a specific limitation on the computing chip 100. In some other embodiments of this application, the computing chip 100 may include more or fewer components than those shown in the figure, or some components may be combined, or some components may be split, or different component arrangements may be used. For example, the computing chip 100 may include a plurality of computing units, and memory units of any two levels in the memory 120 may access each other. The components shown in the figure may be implemented by using hardware, software, or a combination of software and hardware.

Before the performance of the application is tested, the performance test model may be first established for the computing chip configured to run the application. The following uses the computing chip shown in FIG. 1 as an example to describe a specific process of establishing the performance test model. FIG. 2 is a flowchart of a model establishment method according to an embodiment of this application. The model establishment method may be performed by a computing device that establishes a performance test model for a computing chip. The computing device may be referred to as a model establishment device. As shown in FIG. 2, the method may include the following steps.

S201: Determine a peak value of a computing capability of a computing unit of a computing chip based on a plurality of pieces of obtained first test data with different data volumes.

The model establishment device may receive a plurality of pieces of first test data input by a test person, or obtain a plurality of pieces of first test data from another device in a wired or wireless connection manner. For example, the model establishment device may obtain required first test data from a same device, or may obtain required first test data from a plurality of different devices. A plurality of tests are separately performed on the computing capability of the computing unit based on the plurality of pieces of obtained first test data, where a data volume of the first test data used in each test is different. A test process of each test may include: determining a computing capability of the computing unit based on a ratio of a computing amount to a computing time of the computing unit for processing input first test data; and using a maximum value of the computing capabilities of the computing unit determined in the plurality of tests as the peak value of the computing capability of the computing unit of the computing chip.

For example, in any test, the model establishment device may randomly extract first test data with any data volume from the plurality of pieces of first test data, input the extracted first test data into the computing unit, and obtain a computing time and a computing amount of the computing unit for processing the first test data. For example, the computing time and the computing amount of the computing unit may be counted through a performance monitoring tool such as a profiling tool, and a ratio of the computing amount to the computing time is used as a computing capability of the computing unit obtained in this test. The profiling tool may be deployed inside the computing chip, or may be deployed outside the computing chip, for example, deployed in the model establishment device. The profiling tool may also be configured to count a running time of an application during a performance test of the application, a computing amount of the computing unit within the running time, and a memory access volume of each data access path described below.

By using the foregoing method, the plurality of tests are performed repeatedly, and a specific value of the computing capability of the computing unit may be obtained in each test. A maximum value of all obtained computing capabilities is used as the peak value of the computing capability of the computing unit of the computing chip, and may also be referred to as the peak value of the computing capability of the computing chip.

S202: Determine, for each data access path of the computing chip, a peak bandwidth of each data access path based on a plurality of pieces of obtained second test data with different data volumes.

The data access path refers to an access path between memory units of different levels in the computing chip. The data access path may include an access path formed by serial access between two memory units of adjacent levels, and may further include an access path formed by cross-level access between two memory units of non-adjacent levels. The AI chip shown in FIG. 1 is used as an example. The computing chip includes four memory units of different levels: L1, L2, L3, and DRAM. Based on an access characteristic between the memory units in the computing chip, the computing chip includes nine data access paths in total: DRAM→L1, DRAM→L3, L3→L1, L3→L2, L3→DRAM, L2→L1, L2→L3, L2→DRAM, and L1→L2. L1 and L2 are two memory units of adjacent levels. Therefore, L1→L2 and L2→L1 are data access paths formed by serial access between the two memory units; and DRAM and L1 are two memory units of non-adjacent levels. Therefore, DRAM→L1 is a data access path formed by cross-level access between the two memory units.

In some embodiments, if a memory unit in the computing chip includes two or more storage media, an independent data access path may be formed between each storage medium and another memory unit. For example, it is assumed that a memory unit L2 in a computing chip includes two storage media, it may be considered that the memory unit L2 includes two parts: One part is denoted as L2a, and the other part is denoted as L2b. In this case, four data access paths L2a→L3, L2b→L3, L3→L2a and L3→L2b may be formed between the memory unit L2 and another memory unit L3 of an adjacent level.

It should be noted that data access paths included in a computing chip are determined by an access characteristic of each memory unit in the computing chip, and are already determined when the computing chip is manufactured. For a computing chip, any two memory units cannot necessarily access each other across levels, to form a data access path. For example, in the computing chip shown in FIG. 1, DRAM→L1 may form a data access path, but L1 cannot directly access the DRAM. Therefore, L1→DRAM does not form a data access path. It may be understood that a structure of the computing chip shown in FIG. 1 is merely an example for description. In another embodiment, the computing chip may include more or fewer data access paths, and may further include another data access path different from that in FIG. 1. The model establishment device may determine the data access path of the computing chip based on the structure of the computing chip and the access characteristic of each memory unit in the computing chip that are input by a test person.

The model establishment device may receive a plurality of pieces of second test data input by a test person, or obtain a plurality of pieces of second test data from another device in a wired or wireless connection manner. For example, the model establishment device may obtain required second test data from a same device, or may obtain required second test data from a plurality of different devices.

In an optional embodiment, for any one of the nine data access paths, the model establishment device may determine a peak bandwidth of the data access path by using the following method: separately performing a plurality of tests on a data transmission capability of the data access path, where a data volume of second test data used in each test is different. For example, in any test, data transmission is continuously performed through the data access path, to obtain a data transmission time used in the test. For example, the data transmission time used in the test may be counted through a profiling tool. A ratio of a data volume of second test data used in the test to the data transmission time is used as a memory bandwidth of the data access path obtained in the test. A maximum value of all memory bandwidths obtained through the plurality of tests is used as a peak bandwidth of the data access path.

In another optional embodiment, a plurality of test cases of second test data with different data volumes and different memory transfer modes may be set. The memory transfer mode may include a continuous transfer mode, a constant-step transfer mode, and a random transfer mode. The continuous transfer mode indicates that addresses of to-be-transferred data are continuous. For example, data with a specified data volume is continuously read from an address in a memory. The constant-step transfer mode indicates that addresses of to-be-transferred data are at fixed intervals. The random transfer mode indicates that addresses of to-be-transferred data are at random intervals. For each memory transfer mode, a plurality of pieces of second test data with different data volumes may be selected in a same data volume range. For example, in a range from 0K to 1000K, a plurality of pieces of second test data with data volumes are selected, and are combined with each memory transfer mode to form the plurality of test cases.

For any one of the nine data access paths, the plurality of obtained test cases are separately executed, and a plurality of data transmission tests are performed. A test result of a memory bandwidth of the data access path may be obtained in each test. A maximum value of all memory bandwidths obtained through the plurality of tests is used as a peak bandwidth of the data access path.

According to the foregoing method, the peak bandwidth of each data access path may be determined.

S203: Generate, based on the peak bandwidth of each data access path and the peak value of the computing capability of the computing chip, a performance test model that includes a performance test line of each data access path.

For any data access path in each data access path, a performance test line of the data access path is generated based on a peak bandwidth of the data access path and the peak value of the computing capability of the computing chip, so as to obtain the performance test model of the computing chip. A roofline model may be used for a performance test line of any data access path, and the roofline model may also be referred to as a ridge line and has a characteristic of intuitive visualization. A mathematical expression of the roofline model is performance=min(OI*peak bandwidth, peak performance). In a coordinate system in which the ridge line is located, a vertical coordinate represents a computing capability (performance) of the computing chip, which represents performance of the computing chip; a horizontal coordinate represents an operation intensity (Operational Intensity, OI), the operation intensity represents a computing amount corresponding to unit memory access, peak bandwidth represents a peak bandwidth of the data access path; OI*peak bandwidth is a product of the operation intensity and the peak bandwidth of the data access path; and peak performance represents a peak value of the computing capability of the computing chip. The mathematical expression indicates that the performance of the computing chip is determined by a smaller one in OI*peak bandwidth and peak performance.

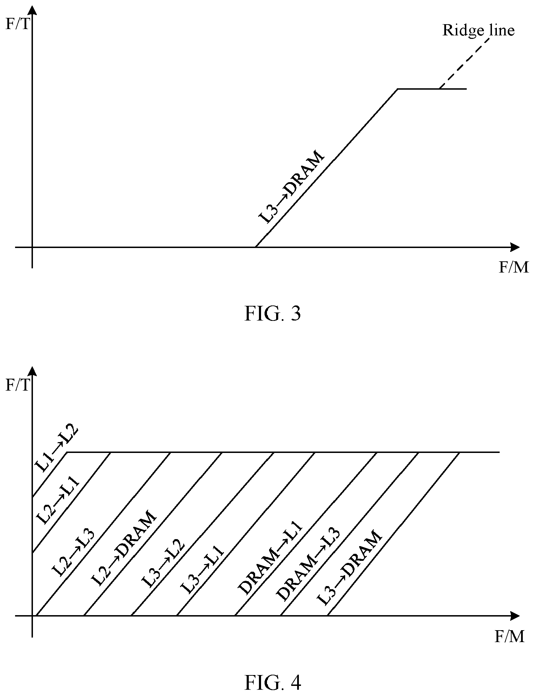

The computing chip shown in FIG. 1 is still used as an example. For a data access path L3→DRAM in the nine data access paths, a roofline model of the data access path, that is, a ridge line shown in FIG. 3, is generated based on a peak bandwidth of the data access path and the peak value of the computing capability of the computing chip. A slash part of the ridge line indicates that when a working point of any application falls on the slash part, it indicates that performance of the application on the computing chip is limited by the peak bandwidth of the data access path L3→DRAM in the computing chip. Therefore, a region corresponding to the slash part may be referred to as a memory bound (memory bound) region. A horizontal part of the ridge line indicates that when a working point of any application falls on the horizontal part, it indicates that performance of the application on the computing chip is limited by the peak value of the computing capability of the computing unit of the computing chip. Therefore, a region corresponding to the horizontal part may be referred to as a compute bound (compute bound) region.

By using the foregoing method, a performance test line of each of the nine data access paths may be obtained, and the performance test model of the computing chip is established based on the performance test line of each data access path. The performance test model may include nine ridge lines shown in FIG. 4.

In this embodiment of this application, when the performance test model is established for the computing chip, the performance test line of each data access path of the computing chip is separately determined, so that the performance test model with higher precision can be established. The application is tested through the performance test model, so that a test result with higher precision can be obtained, thereby improving test accuracy and test precision.

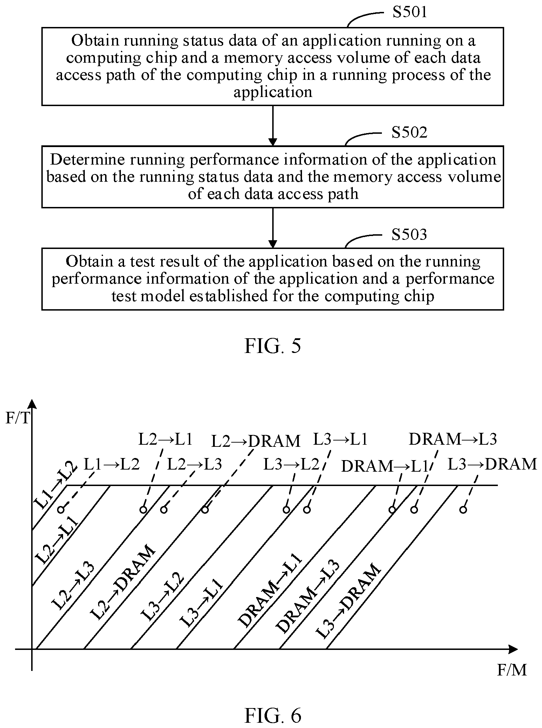

In some optional embodiments, as shown in FIG. 5, an application performance test process with reference to a performance test model established for a computing chip may include the following steps.

S501: Obtain running status data of an application running on a computing chip and a memory access volume of each data access path of the computing chip in a running process of the application.

The running status data may include a running time of the application on the computing chip, and a computing amount of a computing unit of the computing chip within the running time. The computing chip is a computing chip for which the performance test model is pre-established according to the method in the foregoing steps S201 to S204. The computing chip may include a plurality of memory units of different levels. A data access path refers to an access path between the memory units. Details are described above, and details are not described herein again.

In this embodiment, the computing chip shown in FIG. 1 is used as an example for description. For example, in the computing chip shown in FIG. 1, DRAM→L1 is a data access path, and L1→L2 is also a data access path.

For example, the running time of the application, the computing amount of the computing unit of the computing chip within the running time, and the memory access volume of each data access path may be counted through a profiling tool.

S502: Determine running performance information of the application based on the running status data and the memory access volume of each data access path.

The running performance information of the application refers to performance description information of the application obtained by running the application. In some embodiments, the running performance information of the application may include sub-path performance information of each data access path, and the sub-path performance information of each data access path may be reflected by a computing capability parameter of the computing chip and an operation intensity of the data access path in the running process of the application. Each data access path refers to each data access path on which data transmission is performed in the running process of the application. For a data access path on which no data transmission is performed, a memory access volume of the data access path is 0, and an operation intensity of the data access path cannot be obtained. Therefore, sub-path performance information of the data access path does not need to be determined.

The sub-path performance information of each data access path may be obtained in the following manner: A computing capability parameter of the computing chip may be determined based on the computing amount of the computing unit of the computing chip and the running time of the application in the running process of the application, where the computing capability parameter indicates a computing amount completed by the computing chip in a unit time in the running process of the application. For example, it is assumed that the running time of the application is Time, and within the running time Time, the computing amount of the computing unit of the computing chip is Flop, the computing capability parameter of the computing chip may be represented as Flop/Time.

After the computing capability parameter of the computing chip is obtained, for each data access path, the following operation may be separately performed: An operation intensity of the data access path may be determined based on the computing amount of the computing unit of the computing chip and a memory access volume of the data access path. The operation intensity of the data access path represents a computing amount corresponding to unit memory access of the data access path. For example, it is assumed that within the running time Time, the computing amount of the computing unit of the computing chip is Flop, and the memory access volume of the data access path is Memory, the operation intensity of the data access path may be represented as Flop/Memory. The sub-path performance information of the data access path is generated based on the computing capability parameter of the computing chip and the operation intensity of the data access path.

For example, the computing chip shown in FIG. 1 is still used as an example. As shown in FIG. 6, the sub-path performance information of each data access path may be represented by a location of a sub-path working point corresponding to each data access path in the performance test model. In FIG. 6, a hollow dot represents a sub-path working point of each data access path, a horizontal coordinate of the sub-path working point represents an operation intensity of the data access path, and a vertical coordinate of the sub-path working point represents a computing capability parameter of the computing chip. A horizontal coordinate of a sub-path working point of an i^{th} data access path may be represented as Flop/Memory;, and is represented as F/M in the figure. A vertical coordinate may be represented as Flop/Time, and is represented as FIT in the figure. Flop is the computing amount of the computing unit of the computing chip obtained in step S501, Memory; is a memory access volume of the i^{th} data access path obtained in step S501, and Time is the running time of the application obtained in step S501.

In some other embodiments, the running performance information of the application may include the sub-path performance information of each data access path and set performance information of each data path set. Each data path set includes at least one data access path, and data access paths in a same data path set cannot be simultaneously accessed. Each data path set is obtained by grouping data access paths in the computing chip based on a memory access characteristic. Specifically, data access paths that can be simultaneously accessed may be grouped into different data path sets, and data access paths that cannot be simultaneously accessed may be grouped into a same data path set. A data path set may also be referred to as a pipeline. That is, any two data access paths that belong to different data path sets may simultaneously perform data access. Each data path set includes one or more data access paths that cannot simultaneously perform data access. In other words, if one data path set includes a plurality of data access paths, for any one of the data access paths, there is at least another data access path that cannot simultaneously perform data access with the data access path.

The set performance information of each data path set may indicate overall performance of all data access paths included in the data path set. The set performance information of each data path set may be determined based on the computing capability parameter of the computing chip in the running process of the application and an operation intensity of each data access path included in the data path set.

The set performance information of each data path set may be obtained in the following manner: A computing capability parameter of the computing chip may be determined based on the computing amount of the computing unit of the computing chip and the running time of the application in the running process of the application. For example, as described above, the computing capability parameter of the computing chip may be represented as Flop/Time.

After the computing capability parameter of the computing chip is obtained, for each data path set, the following operation may be separately performed: A sum of memory access volumes of data access paths included in the data path set is determined based on the obtained memory access volume of each data access path. An overall operation intensity of the data path set is determined based on a ratio of the computing amount of the computing unit of the computing chip to the sum of the memory access volumes of the data access paths included in the data path set. For example, the sum of the memory access volumes of the data access paths included in the data path set may be represented as Σmemory, and the overall operation intensity of the data path set may be represented as Flop/Σmemory. Set performance information of the data path set is generated based on the obtained computing capability parameter and the overall operation intensity of the data path set.

Data access paths in each data path set belong to a same load store unit (load store unit, LSU). For example, the nine data access paths included in the computing chip shown in FIG. 1 are grouped, to obtain the following several groups of data path sets: DRAM→L1 and DRAM→L3 belong to LSU1, L3→L1 and L3→L2 belong to LSU2, L2→L1, L2→L3, L2→DRAM belongs to LSU3, L3→DRAM belongs to LSU4, and L1→L2 belongs to LSU5.

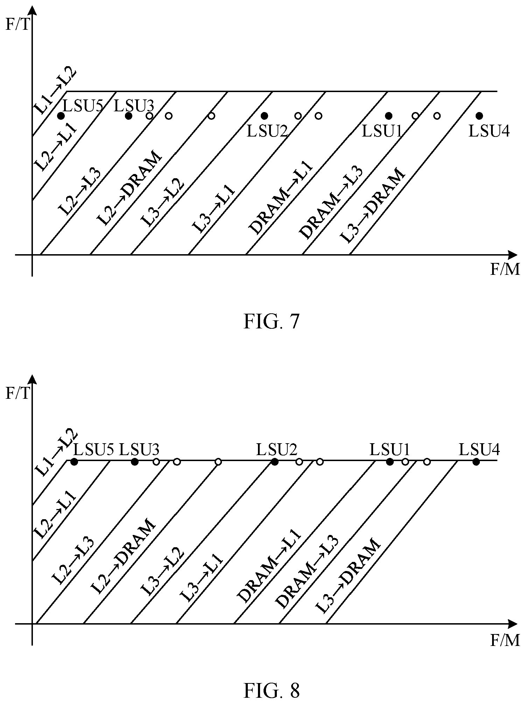

As shown in FIG. 7, the set performance information of each data path set may be represented by a location of an overall working point corresponding to each data path set. A solid dot in FIG. 7 represents an overall working point of each data path set, a horizontal coordinate of the overall working point is determined by using an overall operation intensity of a corresponding data path set, and a vertical coordinate of the overall working point is determined by using the computing capability parameter of the computing chip. A horizontal coordinate of an overall working point of an i^{th} data path set may be represented as Flop/ΣMemoryᵢ, and is represented as F/M in the figure. A vertical coordinate may be represented as Flop/Time, and is represented as FAT in the figure. Flop is the computing amount of the computing unit of the computing chip obtained in step S501, ΣMemoryᵢ is a sum of memory access volumes of data access paths included in the i^{th} data path set obtained in step S501, and Time is the running time of the application obtained in step S501.

Because the vertical coordinate of the sub-path working point of each data access path is determined by using the computing capability parameter of the computing chip, and the vertical coordinate of the overall working point of each data path set is also determined by using the computing capability parameter of the computing chip, vertical coordinates of each overall working point and each sub-path working point are the same. In FIG. 7, each overall working point and each sub-path working point are located on a same horizontal line.

If a data path set includes only one data access path, an overall working point of the data path set overlaps a sub-path working point of the data access path, and only the overall working point of the data path set may be retained. For example, in FIG. 7, an overall working point of the LSU4 overlaps a sub-path working point of the data access path L3→DRAM included in the LSU4, and the sub-path working point of the data access path L3→DRAM is covered, and only the overall working point of the LSU4 is retained. If an overall working point of the LSU5 overlaps a sub-path working point of the data access path L1→L2 included in the LSU5, the sub-path working point of the data access path L1→L2 is covered, and only the overall working point of the LSU5 is retained.

S503: Obtain a test result of the application based on the running performance information of the application and a performance test model established for the computing chip.

The performance test model established for the computing chip may include a performance test line of each data access path of the computing chip.

In some other embodiments, a comparison result between the running performance information of the application and the performance test line of each data access path in the performance test model may be determined, and the comparison result is used as the test result of the application. This helps a user determine an optimization direction of the application based on the comparison result.

For example, in an embodiment, if the running performance information of the application includes sub-path performance information of each data access path, a comparison result between the sub-path performance information of each data access path and the performance test line of each data access path may be determined, and the comparison result is used as the test result of the application. For example, a graph shown in FIG. 6 may be used as the test result of the application and displayed to a user, and the user may determine, based on the displayed graph, a specific direction in which the application needs to be optimized.

In another embodiment, if the running performance information of the application includes sub-path performance information of each data access path and set performance information of each data path set, a comparison result between each set performance information and each sub-path performance information and the performance test line of each data access path may be determined, and the comparison result is used as the test result of the application. For example, a graph shown in FIG. 7 may be used as the test result of the application and displayed to the user, and the user may determine, based on the displayed graph, a specific bottleneck point that needs to be optimized in the application.

Optionally, for each overall working point, information about a data path set to which the overall working point belongs may be displayed. For each sub-path working point, information about a data access path corresponding to the sub-path working point may be displayed. For each sub-path working point, a data access volume of a data access path corresponding to the sub-path working point and a distance from each sub-path working point to a corresponding ridge line may be further displayed. In some embodiments, a data processing speed of the application may also be represented by using a size of each overall working point or each sub-path working point. If the data processing speed of the application is fast, a size of each work point is small. If the data processing speed of the application is slow, a size of each work point is large. In other words, a diameter of each work point is positively correlated with the running time of the application.

In some embodiments, a comparison result between the running performance information of the application and the performance test line of each data access path in the performance test model may be determined, an analysis result indicating to optimize the application is determined based on the comparison result, and the analysis result is used as the test result of the application, so that a user can effectively optimize the application directly based on the analysis result.

For example, in an embodiment, if the running performance information of the application includes sub-path performance information of each data access path, a comparison result between the sub-path performance information of each data access path and the performance test line of each data access path may be determined, an analysis result indicating to optimize the application is determined based on the comparison result, and the analysis result is used as the test result of the application. In this embodiment, the sub-path performance information of each data access path in the running process of the application is compared with the performance test line of each data access path of the computing chip, so that the test result with higher precision can be obtained, thereby improving test accuracy and test precision.

In another embodiment, if the running performance information of the application includes sub-path performance information of each data access path and set performance information of each data path set, a comparison result between each set performance information and each sub-path performance information and the performance test line of each data access path may be determined, an analysis result indicating to optimize the application is determined based on the comparison result, and the analysis result is used as the test result of the application. In the following example description, the set performance information of each data path set is described by using an overall working point, and the sub-path performance information of each data access path is described by using a sub-path working point.

For example, in an embodiment, as shown in FIG. 8, each overall working point and each sub-path working point are located in a compute bound region, which indicates that performance of the application on the computing chip is limited by the peak value of the computing capability of the computing unit of the computing chip, and an obtained performance test result may be: The performance of the application is limited by the peak value of the computing capability of the computing unit of the computing chip. In this case, if the performance of the application needs to be improved, the computing capability of the computing chip may be improved. For example, a computing chip with a higher computing capability may be selected. Alternatively, code of the application may be modified, and an original computing method in the application is replaced by another computing method, to reduce a computing amount, so that the application is more adaptive to a current computing capability of the computing chip.

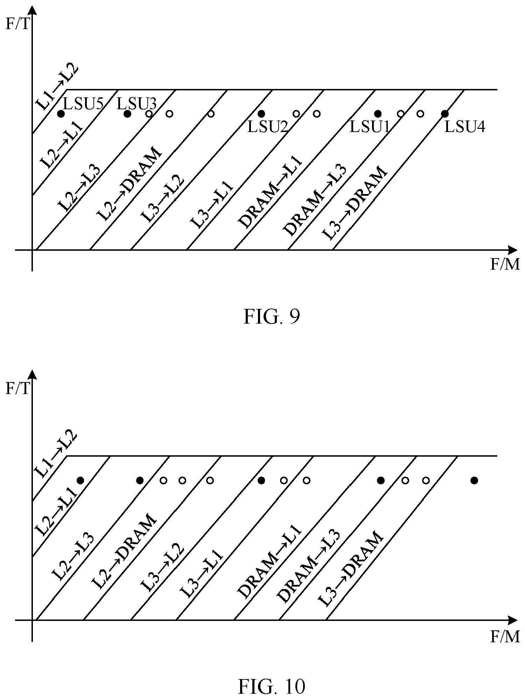

In another embodiment, at least one overall working point or at least one sub-path working point is located in a memory bound region. As shown in FIG. 9, an overall working point corresponding to the LSU4 or a sub-path working point corresponding to the data access path L3→DRAM is located in the memory bound region, which indicates that the performance of the application on the computing chip is limited by a peak bandwidth of the data access path L3→DRAM in the computing chip, and an obtained performance test result may be: The performance of the application is limited by the peak bandwidth of the data access path L3→DRAM in the computing chip. In this case, if the performance of the application needs to be improved, a peak bandwidth of a corresponding data access path of the computing chip may be increased, for example, a corresponding memory unit may be improved. Alternatively, code of the application may be modified, and an original computing method in the application is replaced by another computing method, to increase the operation intensity of the application, reduce a data transmission amount in the running process of the application, and reduce pressure on a memory access bandwidth, that is, increase a value of Flop/memory;, so that the locations of each overall working point and each sub-path working point move rightwards, to overcome a bandwidth bottleneck.

In another embodiment, as shown in FIG. 10, each overall working point and each sub-path working point are neither located in the computer bound region nor located in the memory bound region. If performance of the application is poor, for example, in a use process, a data processing speed of the application is slow and cannot meet a requirement, it may be considered that a latency bound (latency bound) exists, and an obtained performance test result may be: The performance of the application is limited by a latency. The reason is that performance of an operator in the application is poor, and the code of the application needs to be modified, to optimize the performance of the operator.

Compared with a related technology, in this embodiment of this application, when modeling is performed on the computing chip, modeling may be performed on each data access path of the computing chip, to represent a memory access characteristic of each data access path, so that the computing chip with a complex structure can be accurately modeled, to obtain the performance test model with higher precision. In a modeling process, a serial access characteristic between hierarchical memories is considered, and a cross-level access characteristic between memories is also considered. An obtained performance test module can accurately describe a computing characteristic and a memory access characteristic of the computing chip with a complex structure shown in FIG. 1.

In some embodiments, when the application is tested, the sub-path performance information of each data access path is analyzed, so that a specific bottleneck point that needs to be optimized in the application can be accurately represented and fed back, and the test result with high precision is obtained.

In some embodiments, when the application is tested, the sub-path performance information of each data access path and the set performance information of each data path set are analyzed, where the set performance information is a general description of overall performance of data access paths controlled by a same memory unit. The set performance information may feed back that the performance of the application is limited by an access characteristic of a specific memory unit. The sub-path performance information may feed back that the performance of the application is limited by an access characteristic of a specific data access path. Through combination of the two analysis methods, a working status description and a bottleneck analysis result of the application can be provided more accurately in more detail based on different analysis granularities.

In some embodiments, the computing chip configured to test the application may include a plurality of computing units. For the computing chip including the plurality of computing units, a performance test model may be established for each computing unit, that is, the performance test model of the computing chip includes a performance test model established for each computing unit. The following uses the computing chip including two computing units as an example for description.

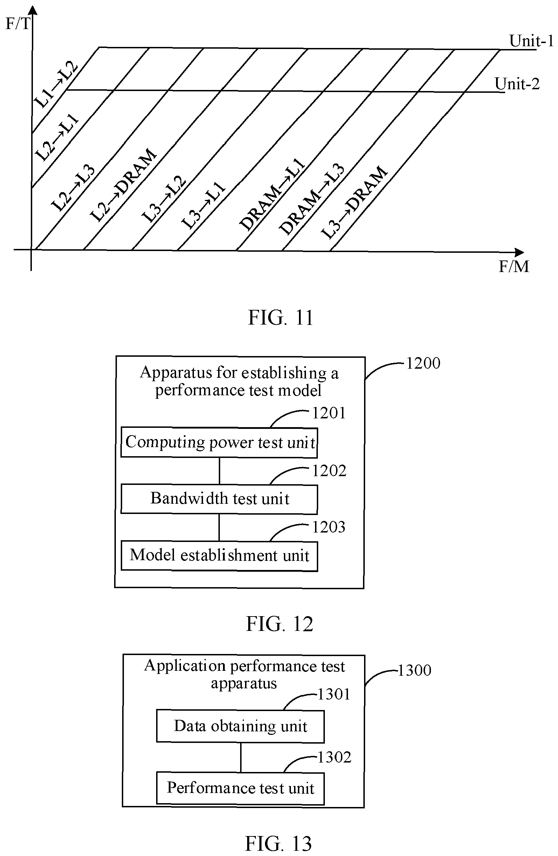

It is assumed that the computing chip includes two computing units Unit-1 and Unit-2 and four memory units of different levels shown in FIG. 1. When the performance test model is established for the computing chip, by using the method described above, peak values of computing capabilities of the Unit-1 and the Unit-2 and a peak bandwidth of each data access path may be separately determined, and a performance test model corresponding to the Unit-1 is established based on the peak bandwidth of each data access path and the peak value of the computing capability of the Unit-1; and a performance test model corresponding to the Unit-2 is established based on the peak bandwidth of each data access path and the peak value of the computing capability of the Unit-2. The finally obtained performance test model of the computing chip is shown in FIG. 11.

For example, the tested application is a neural network model or a program module including a neural network model. When performance of the neural network model is tested through the computing chip including the two computing units Unit-1 and Unit-2, computation of different types in the neural network model may be performed by different computing units based on different computing characteristics of each computing unit. For example, computation of a convolution type may be performed through the Unit-1, computation of a pooling operation may be performed through the Unit-2, and a computing amount of the Unit-1 and a computing amount of the Unit-2 and a memory access volume of each data access path may be separately obtained through a performance monitoring and counting tool.

In an embodiment, a sum of the computing amount of the Unit-1 and the computing amount of the Unit-2 may be used as a computing amount of the computing unit of the computing chip. A location of a sub-path working point of each data access path and a location of an overall working point of each data path set are determined by using the foregoing method based on the computing amount of the computing unit of the computing chip and the memory access volume of each data access path. A location of each sub-path working point and a location of each overall working point are compared with a ridge line corresponding to each data access path in the performance test models of the Unit-1 and the Unit-2, to determine whether the performance of the neural network model is limited by a computing capability of the Unit-1 or by a computing capability of the Unit-2, or that a low data processing speed of the neural network model is caused by poor performance of an operator in the neural network model, or other reasons.

In another embodiment, for the computing unit Unit-1, a location of a sub-path working point of each data access path and a location of an overall working point of each data path set may be determined by using the foregoing method based on the computing amount of the Unit-1 and the memory access volume of each data access path. The location of each sub-path working point and the location of each overall working point are compared with the ridge line corresponding to each data access path in the performance test model of the Unit-1, to determine whether the performance of the neural network model is limited by the computing capability of the Unit-1. For the computing unit Unit-2, a location of a sub-path working point of each data access path and a location of an overall working point of each data path set may be determined by using the foregoing method based on the computing amount of the Unit-2 and the memory access volume of each data access path. The location of each sub-path working point and the location of each overall working point are compared with the ridge line corresponding to each data access path in the performance test model of the Unit-2, to determine whether the performance of the neural network model is limited by the computing capability of the Unit-2. If the performance of the neural network model is not limited by the computing capabilities of the Unit-1 and the Unit-2, the low data processing speed of the neural network model is caused by poor performance of the operator in the neural network model or other reasons or not.

The application performance test method provided in embodiments of this application may be applied to an application scenario in which performance and bottleneck analysis and load performance optimization are performed on a load (application), such as an Internet data center or an edge side device. The application performance test method provided in embodiments of this application may be used for various architectures in which the computing chip is deployed on a server or a terminal device.

Based on a same inventive concept as that of the foregoing method embodiment for establishing a performance test model, an embodiment of this application further provides an apparatus for establishing a performance test model. The apparatus for establishing a performance test model may be used in a computing device for establishing a performance test model for a computing chip, and the computing device may be a device such as a server or a computer. The apparatus for establishing a performance test model may be configured to implement functions of the foregoing method embodiment for establishing a performance test model, and therefore may implement the beneficial effects of the foregoing method embodiment for establishing a performance test model.

As shown in FIG. 12, an apparatus 1200 for establishing a performance test model provided in this embodiment of this application may include a computing power test unit 1201, a bandwidth test unit 1202, and a model establishment unit 1203. The apparatus 1200 for establishing a performance test model is configured to implement the functions of the method embodiment shown in FIG. 2. When the apparatus 1200 for establishing a performance test model is configured to implement the functions of the method embodiment shown in FIG. 2, the computing power test unit 1201 may be configured to perform S201, the bandwidth test unit 1202 may be configured to perform S202, and the model establishment unit 1203 may be configured to perform S203. For example, the computing power test unit 1201 is configured to determine a peak value of a computing capability of a computing unit of a computing chip based on a plurality of pieces of obtained first test data with different data volumes. The bandwidth test unit 1202 is configured to determine, for each data access path of the computing chip, a peak bandwidth of each data access path based on a plurality of pieces of obtained second test data with different data volumes, where the computing chip includes a plurality of memory units, and each data access path represents an access path between the memory units. The model establishment unit 1203 is configured to establish a performance test model based on the peak bandwidth of each data access path and the peak value of the computing capability of the computing unit, where the performance test model includes a performance test line of each data access path.

In a possible implementation, the computing power test unit 1201 may be specifically configured to: perform a plurality of tests on the computing unit of the computing chip based on the plurality of pieces of first test data, where a test process of each test includes: determining a computing capability of the computing unit based on a ratio of a computing amount to a computing time of the computing unit for processing input first test data; and using, as the peak value of the computing capability of the computing unit of the computing chip, a maximum value of the computing capability of the computing unit determined in each test.

Based on a same inventive concept as that of the application performance test method embodiment, an embodiment of this application further provides an application performance test apparatus. The application performance test apparatus may be used in a computing device that performs an application performance test on a computing chip. The computing device may be a device such as a server or a computer. The established application performance test apparatus may be configured to implement functions of the application performance test method embodiment, and therefore may implement the beneficial effects of the application performance test method embodiment.

As shown in FIG. 13, an application performance test apparatus 1300 provided in this embodiment of this application may include a data obtaining unit 1301 and a performance test unit 1302. The application performance test apparatus 1300 is configured to implement the functions of the method embodiment shown in FIG. 5. When the application performance test apparatus 1300 is configured to implement the functions of the method embodiment shown in FIG. 5, the data obtaining unit 1301 may be configured to perform S501, and the performance test unit 1302 may be configured to perform S502 and S503. For example, the data obtaining unit 1301 is configured to obtain running status data of an application running on a computing chip and a memory access volume of each data access path of the computing chip in a running process of the application, where the computing chip includes a plurality of memory units, and the data access path represents an access path between the memory units. The performance test unit 1302 is configured to determine running performance information of the application based on the running status data and the memory access volume of each data access path; and obtain a test result of the application based on the running performance information of the application and a performance test model established for the computing chip, where the performance test model includes a performance test line of each data access path.

In a possible implementation, the running status data includes a running time of the application, and a computing amount of a computing unit of the computing chip within the running time. The performance test unit 1302 may be specifically configured to: determine a computing capability parameter of the computing chip in the running process of the application based on the computing amount and the running time; determine, for each data access path, an operation intensity of each data access path based on the computing amount and the memory access volume of each data access path; and generate sub-path performance information of each data access path based on the computing capability parameter and the operation intensity of each data access path.

In a possible implementation, the running performance information of the application further includes set performance information of each data path set; and each data path set includes at least one data access path, and data access paths in a same data path set cannot be simultaneously accessed. The performance test unit 1302 may be further configured to: determine, for each data path set, an overall operation intensity of each data path set based on a sum of memory access volumes of data access paths in each data path set and the computing amount; and generate the set performance information of each data path set based on the computing capability parameter and the overall operation intensity of each data path set.

In a possible implementation, the performance test unit 1302 may be specifically configured to: determine a comparison result between the running performance information of the application and the performance test line of each data access path in the performance test model, and use the comparison result as the test result of the application.

In a possible implementation, the performance test unit 1302 may be specifically configured to: determine a comparison result between the running performance information of the application and the performance test line of each data access path in the performance test model; and determine, based on the comparison result, an analysis result indicating to optimize the application, and use the analysis result as the test result of the application.

In a possible implementation, the performance test model is established based on a peak value of a computing capability of the computing unit of the computing chip and a peak bandwidth of each data access path. The peak value of the computing capability of the computing unit and the peak bandwidth of each data access path are determined by testing the computing chip by using test data.

Based on a same inventive concept as that of the foregoing method embodiments, an embodiment of this application further provides a computing device. The computing device may be configured to implement functions of the foregoing method embodiments, and therefore may implement the beneficial effects of the foregoing method embodiments. The computing device may be a device such as a server or a computer.

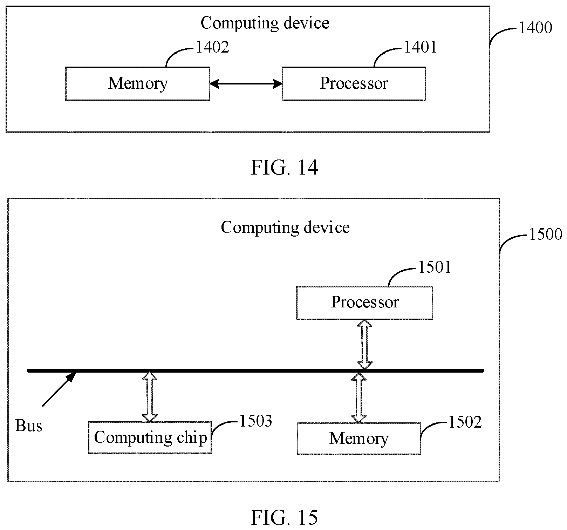

In some embodiments, a structure of the computing device may be shown in FIG. 14, and includes a processor 1401 and a memory 1402 connected to the processor 1401.

Optionally, the processor 1401 and the memory 1402 may be connected to each other by a bus. The processor 1401 may be a general purpose processor, for example, a microprocessor, or another conventional processor. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

The memory 1402 is configured to store instructions or a program executed by the processor 1401, or store input data required by the processor 1401 to run instructions or a program, or store data generated after the processor 1401 runs instructions or a program. The processor 1401 may include one or more processing units. Different processing units may be independent components, or may be integrated into one or more processors. The processor 1401 may further include a controller. The controller may generate an operation control signal based on an instruction operation code and a timing signal, to complete control of fetching and executing an instruction.

In an embodiment, the processor 1401 may be connected to a to-be-tested computing chip disposed outside the computing device. For example, the processor 1401 may be connected to a computing chip in another device, to establish a performance test model for the computing chip.

For example, the processor 1401 in the computing device 1400 is configured to run the instructions or the program stored in the memory 1402, to perform the functions of the method embodiment shown in FIG. 2. For example, when the computing device 1400 is configured to implement the method shown in FIG. 2, the processor 1401 is configured to perform functions of the computing power test unit 1201, the bandwidth test unit 1202, and the model establishment unit 1203. For example, for the computing power test unit 1201, the processor 1401 may invoke the program or the instructions stored in the memory, to determine a peak value of a computing capability of a computing unit of a computing chip based on a plurality of pieces of obtained first test data with different data volumes. For the bandwidth test unit 1202, the processor 1401 may invoke the program or the instructions stored in the memory, to determine, for each data access path of the computing chip, a peak bandwidth of each data access path based on a plurality of pieces of obtained second test data with different data volumes, where the computing chip includes a plurality of memory units, and each data access path represents an access path between the memory units. For the model establishment unit 1203, the processor 1401 may invoke the program or the instructions stored in the memory, to establish a performance test model based on the peak bandwidth of each data access path and the peak value of the computing capability of the computing unit, where the performance test model includes a performance test line of each data access path.

In another embodiment, the processor 1401 may be connected to a to-be-tested computing chip disposed outside the computing device. For example, the processor 1401 may be connected to a computing chip in another device, to establish a performance test model for the computing chip.

For example, the processor 1401 in the computing device 1400 is configured to run the instructions or the program stored in the memory 1402, to perform the functions of the method embodiment shown in FIG. 5. For example, when the computing device 1400 is configured to implement the method shown in FIG. 5, the processor 1401 is configured to perform functions of the data obtaining unit 1301 and the performance test unit 1302. For example, for the data obtaining unit 1301, the processor 1401 may invoke the program or the instructions stored in the memory, to obtain running status data of an application running on a computing chip and a memory access volume of each data access path of the computing chip in a running process of the application, where the computing chip includes a plurality of memory units, and the data access path represents an access path between the memory units. For the performance test unit 1302, the processor 1401 may invoke the program or the instructions stored in the memory, to determine running performance information of the application based on the running status data and the memory access volume of each data access path; and obtain a test result of the application based on the running performance information of the application and a performance test model established for the computing chip, where the performance test model includes a performance test line of each data access path.

In some other embodiments, a structure of the computing device may be shown in FIG. 15. A computing device 1500 may include a processor 1501, and a memory 1502 and a computing chip 1503 that are connected to the processor 1501.

Optionally, the processor 1501, the memory 1502, and the computing chip 1503 may be connected to each other by a bus. The processor 1501 may be a general purpose processor, for example, a microprocessor, or another conventional processor. The bus may be a PCI bus, an EISA bus, or the like. For ease of representation, only one bold line is used to represent the bus in FIG. 15, but this does not mean that there is only one bus or only one type of bus.

The memory 1502 is configured to store instructions or a program executed by the processor 1501, or store input data required by the processor 1501 to run instructions or a program, or store data generated after the processor 1501 runs instructions or a program. The processor 1501 may include one or more processing units. Different processing units may be independent components, or may be integrated into one or more processors.

In an embodiment, the processor 1501 may run the instructions or the program stored in the memory 1502, to perform the functions of the method embodiment for establishing a performance test model shown in FIG. 2. In another embodiment, the processor 1501 may run the instructions or the program stored in the memory 1502, to perform the functions of the application performance test method embodiment shown in FIG. 5.

It may be understood that the structure shown in this embodiment of this application constitutes no specific limitation on the computing device. In some other embodiments of this application, the computing device may include more or fewer components than those shown in the figure, or have some components combined, or have some components split, or have a different component arrangement. The components shown in the figure may be implemented by using hardware, software, or a combination of software and hardware.

The method steps in embodiments of this application may be implemented in a hardware manner or may be implemented in a manner of executing a computer program or instruction by a processor. The computer program or instruction may constitute a computer program product. An embodiment of this application further provides a computer program product, including computer executable instructions. In an embodiment, the computer executable instructions are used to enable a computer to perform functions of the method embodiment for establishing a performance test model shown in FIG. 2. In another embodiment, the computer executable instructions are used to enable a computer to perform the functions of the embodiment of the method for establishing a performance test model shown in FIG. 5.

The computer executable instructions may be stored in a computer-readable storage medium. An embodiment of this application further provides a computer-readable storage medium, and the computer readable storage medium stores executable instructions. In an embodiment, the computer executable instructions are used to enable a computer to perform functions of the method embodiment for establishing a performance test model shown in FIG. 2. In another embodiment, the computer executable instructions are used to enable a computer to perform the functions of the method embodiment for establishing a performance test model shown in FIG. 5.

The computer-readable storage medium provided in this embodiment of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically ePROM, EEPROM), a register, a hard disk, a removable hard disk, a CD-ROM, or a computer-readable storage medium in any other forms well-known in the art.

The computer executable instructions may be stored in a computer-readable storage medium, or may be transmitted from a computer-readable storage medium to another computer-readable storage medium. For example, the computer program or instructions may be transmitted from a website, a computer, a server, or a data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. In addition, the terms "include", "have", and any other variants thereof are intended to cover a non-exclusive inclusion, for example, include a series of steps or units. Methods, systems, products, or devices do not need to be limited to those steps or units that are clearly listed, but may include other steps or units that are not clearly listed or inherent to these processes, methods, products, or devices.

Although this application is described with reference to the specific features and embodiments of this application, it is clear that various modifications and combinations can be made to this application without departing from the spirit and scope of this application. Correspondingly, this specification and the accompanying drawings are merely examples of descriptions of this solution defined by the appended claims, and it is considered that any and all modifications, changes, combinations, or equivalents in the scope of this application are already covered.

It is clear that, a person skilled in the art can make various modifications and variations to this application without departing from the scope of this application. In this way, this application is intended to cover these modifications and variations of embodiments of this application provided that they fall within the scope of protection defined by the following claims and their equivalent technologies.

## Claims

1. An application performance test method, wherein the method comprises:
obtaining running status data of an application running on a computing chip and a memory access volume of each data access path of the computing chip in a running process of the application, wherein the computing chip comprises a plurality of memory units, and the data access path represents an access path between the memory units;
determining running performance information of the application based on the running status data and the memory access volume of each data access path; and
obtaining a test result of the application based on the running performance information of the application and a performance test model established for the computing chip, wherein the performance test model comprises a performance test line of each data access path.

2. The method according to claim 1, wherein the running status data comprises a running time of the application and a computing amount of a computing unit of the computing chip within the running time; the running performance information of the application comprises sub-path performance information of each data access path; and the determining running performance information of the application based on the running status data and the memory access volume of each data access path comprises:
determining a computing capability parameter of the computing chip in the running process of the application based on the computing amount and the running time;
determining, for each data access path, an operation intensity of each data access path based on the computing amount and the memory access volume of each data access path; and
generating the sub-path performance information of each data access path based on the computing capability parameter and the operation intensity of each data access path.

3. The method according to claim 2, wherein the running performance information of the application further comprises set performance information of each data path set; each data path set comprises at least one data access path, and data access paths in a same data path set cannot be simultaneously accessed; and the determining running performance information of the application based on the running status data and the memory access volume of each data access path further comprises:
determining, for each data path set, an overall operation intensity of each data path set based on a sum of memory access volumes of data access paths in each data path set and the computing amount; and
generating the set performance information of each data path set based on the computing capability parameter and the overall operation intensity of each data path set.

4. The method according to any one of claims 1 to 3, wherein the obtaining a test result of the application based on the running performance information of the application and a performance test model established for the computing chip comprises:
determining a comparison result between the running performance information of the application and the performance test line of each data access path in the performance test model, and using the comparison result as the test result of the application.

5. The method according to any one of claims 1 to 3, wherein the obtaining a test result of the application based on the running performance information of the application and a performance test model established for the computing chip comprises:
determining a comparison result between the running performance information of the application and the performance test line of each data access path in the performance test model; and
determining, based on the comparison result, an analysis result indicating to optimize the application, and using the analysis result as the test result of the application.

6. The method according to any one of claims 1 to 5, wherein the performance test model is established based on a peak value of a computing capability of the computing unit of the computing chip and a peak bandwidth of each data access path, and the peak value of the computing capability of the computing unit and the peak bandwidth of each data access path are determined by testing the computing chip by using test data.

7. A method for establishing a performance test model, comprising:
determining a peak value of a computing capability of a computing unit of a computing chip based on a plurality of pieces of obtained first test data with different data volumes;
determining, for each data access path of the computing chip, a peak bandwidth of each data access path based on a plurality of pieces of obtained second test data with different data volumes, wherein the computing chip comprises a plurality of memory units, and each data access path represents an access path between the memory units; and
establishing a performance test model based on the peak bandwidth of each data access path and the peak value of the computing capability of the computing unit, wherein the performance test model comprises a performance test line of each data access path.

8. The method according to claim 7, wherein the determining a peak value of a computing capability of a computing unit of a computing chip based on a plurality of pieces of obtained first test data with different data volumes comprises:
performing a plurality of tests on the computing unit of the computing chip based on the plurality of pieces of first test data, wherein a test process of each test comprises: determining a computing capability of the computing unit based on a ratio of a computing amount to a computing time of the computing unit for processing input first test data; and
using, as the peak value of the computing capability of the computing unit of the computing chip, a maximum value of the computing capability of the computing unit determined in each test.

9. The method according to claim 7 or 8, wherein the computing chip comprises any one of the following chips:
a central processing unit CPU chip, a tensor processing unit TPU chip, a neural network processing unit NPU chip, a graphics processing unit GPU chip, and an artificial intelligence AI chip.

10. An application performance test apparatus, wherein the apparatus comprises:
a data obtaining unit, configured to obtain running status data of an application running on a computing chip and a memory access volume of each data access path of the computing chip in a running process of the application, wherein the computing chip comprises a plurality of memory units, and the data access path represents an access path between the memory units; and
a performance test unit, configured to determine running performance information of the application based on the running status data and the memory access volume of each data access path; and obtain a test result of the application based on the running performance information of the application and a performance test model established for the computing chip, wherein the performance test model comprises a performance test line of each data access path.

11. The apparatus according to claim 10, wherein the running status data comprises a running time of the application and a computing amount of a computing unit of the computing chip within the running time; and the performance testing unit is specifically configured to:
determine a computing capability parameter of the computing chip in the running process of the application based on the computing amount and the running time;
determine, for each data access path, an operation intensity of each data access path based on the computing amount and the memory access volume of each data access path; and
generate sub-path performance information of each data access path based on the computing capability parameter and the operation intensity of each data access path.

12. The apparatus according to claim 11, wherein the running performance information of the application further comprises set performance information of each data path set; each data path set comprises at least one data access path, and data access paths in a same data path set cannot be simultaneously accessed; and the performance test unit is further configured to:
determine, for each data path set, an overall operation intensity of each data path set based on a sum of memory access volumes of data access paths in each data path set and the computing amount; and
generate the set performance information of each data path set based on the computing capability parameter and the overall operation intensity of each data path set.

13. The apparatus according to any one of claims 10 to 12, wherein the performance test unit is specifically configured to:
determine a comparison result between the running performance information of the application and the performance test line of each data access path in the performance test model, and use the comparison result as the test result of the application.

14. The apparatus according to any one of claims 10 to 12, wherein the performance test unit is specifically configured to:
determine a comparison result between the running performance information of the application and the performance test line of each data access path in the performance test model; and
determine, based on the comparison result, an analysis result indicating to optimize the application, and use the analysis result as the test result of the application.

15. The apparatus according to any one of claims 10 to 14, wherein the performance test model is established based on a peak value of a computing capability of the computing unit of the computing chip and a peak bandwidth of each data access path, and the peak value of the computing capability of the computing unit and the peak bandwidth of each data access path are determined by testing the computing chip by using test data.

16. An apparatus for establishing a performance test model, comprising:
a computing power test unit, configured to determine a peak value of a computing capability of a computing unit of a computing chip based on a plurality of pieces of obtained first test data with different data volumes;
a bandwidth test unit, configured to determine, for each data access path of the computing chip, a peak bandwidth of each data access path based on a plurality of pieces of obtained second test data with different data volumes, wherein the computing chip comprises a plurality of memory units, and each data access path represents an access path between the memory units; and
a model establishment unit, configured to establish a performance test model based on the peak bandwidth of each data access path and the peak value of the computing capability of the computing unit, wherein the performance test model comprises a performance test line of each data access path.

17. The apparatus according to claim 16, wherein the computing power test unit is specifically configured to:
perform a plurality of tests on the computing unit of the computing chip based on the plurality of pieces of first test data, wherein a test process of each test comprises: determining a computing capability of the computing unit based on a ratio of a computing amount to a computing time of the computing unit for processing input first test data; and
use, as the peak value of the computing capability of the computing unit of the computing chip, a maximum value of the computing capability of the computing unit determined in each test.

18. The apparatus according to claim 16 or 17, wherein the computing chip comprises any one of the following chips: a central processing unit CPU chip, a tensor processing unit TPU chip, a neural network processing unit NPU chip, a graphics processing unit GPU chip, and an artificial intelligence AI chip.

19. A computing device, comprising a memory and a processor, wherein the memory stores a computer program that can run on the processor, and when the computer program is executed by the processor, the processor is enabled to implement the method according to any one of claims 1 to 6 or the method according to any one of claims 7 to 9.

20. A computer program product, comprising computer executable instructions, wherein the computer executable instructions are used to enable a computer to perform the method according to any one of claims 1 to 6 or the method according to any one of claims 7 to 9.

21. A computer-readable storage medium, wherein the computer-readable storage medium stores computer executable instructions, and the computer executable instructions are used to enable a computer to perform the method according to any one of claims 1 to 6 or the method according to any one of claims 7 to 9.
